Europäisches Patentamt

(19) European Patent Office

Office européen des brevets

(11) Publication number: **0 305 474 B1**

(12) **EUROPEAN PATENT SPECIFICATION**

(45) Date of publication of patent specification :
18.12.91 Bulletin 91/51

(51) Int. Cl.⁵: **G11B 5/55, H02K 41/035**

(21) Application number: **88902701.7**

(22) Date of filing : **02.03.88**

(86) International application number:
**PCT/US88/00562**

(87) International publication number:
**WO 88/06784 07.09.88 Gazette 88/20**

(54) **VOICE COIL LINEAR ACTUATOR.**

(30) Priority : 02.03.87 US 20933
02.03.87 US 21034

(43) Date of publication of application :
08.03.89 Bulletin 89/10

(45) Publication of the grant of the patent :
18.12.91 Bulletin 91/51

(84) Designated Contracting States :
BE CH DE FR GB IT LI LU NL SE

(56) References cited :
EP-A- 0 117 520
US-A- 3 521 092
US-A- 4 144 466
Patent Abstracts of Japan, volume 10, no. 22
(P-424)(2079), 28 January 1986, & JP-
A-60173778 (NIPPON DENKI K.K.)

(73) Proprietor : Unisys Corporation
P.O. Box 500
Blue Bell Pennsylvania 19424 (US)

(72) Inventor : MORRIS, Frank, Ivan
6936 Port Rowan Drive
San Jose, CA 95119 (US)
Inventor : KROETZ, Whitney, B.
651 Smoke Tree Way
Sunnyvale, CA 94086 (US)

(74) Representative : Eisenführ, Speiser & Strasse
Martinistrasse 24
W-2800 Bremen 1 (DE)

## Description

This invention relates to electromagnetic actuator assemblies and in particular to linear voice-coil assemblies adapted for reciprocating magnetic transducer means relative to magnetic recording surfaces.

Workers know that computers today commonly employ magnetic disk files for recording and storing data. Disk files have the advantage of facilitating data transfer at randomly selected address locations (tracks) and without need for a "serial seek" as with magnetic tape. Such transducers must be reciprocated very rapidly between selected address locations (tracks) with high precision; i.e., the system must move a transducer between locations very quickly and with high positional accuracy between closely-spaced track addresses. This constraint becomes understandably tricky as track density increases.

Disk file systems commonly mount a transducer head on an arm carried by a block that is supported by a carriage. This carriage is usually mounted on tracks for reciprocation by an associated actuator. The present application is concerned with improving the efficiency of such actuators; and particularly with improving linear "voice-coil" positioners.

### Known Positioners:

The actuators commonly used with magnetic disk files are subject to some exacting requirements. For instance, these systems typically involve a stack of several magnetic disks, each with many hundreds of concentric recording tracks with a head-carrying arm typically provided to access each pair of opposing disk surfaces. This arm will typically carry two to ten heads, each to be reciprocated over a stroke excursion of about one inch 2,54 cm position its heads adjacent a selected track. Thus, it will be appreciated that such applications require a high positioning accuracy together with very fast translation (to minimize access time - a significant portion of which is used for head positioning).

Since it is critically important for an actuator system to move a transducer very rapidly between data locations and do so with high positional accuracy between closely-spaced track addresses, this constraint becomes ever more burdensome as track density increases - as is presently the case. Fast access allows a computer to process data as fast as possible - computer time is so expensive that any significant delay over an extended period can inflate costs enormously. [Note: "transition time", during which heads are moved from track to track, is "dead time" insofar as data processing is concerned.]

The trend now is toward ever higher track density, with increased storage capacity and decreased access time. Of course, as track density rises, closer control over the actuator mechanism is necessary to position transducer heads accurately over any selected track, lest signals be recorded, or read, with too much distortion, and without proper amplitude control, etc.

Computer manufacturers typically set specifications that call for such inter-track movements within no more than a few milliseconds. Such high speed translation is most demanding on actuators; it postulates a powerful motor of relatively low mass (including carriage weight) and low translational friction. Another requirement for such head positioners is that they exhibit a relatively long stroke (several inches) in order to minimize the number of heads required per disk.

The prior art discloses many such positioner devices, including some intended for use in magnetic disk memory systems: e.g., see U.S. Pat. Nos. 3,135,880; 3,314,057; 3,619,673; 3,922,720; 4,001,889; 3,544,980; 3,646,536; 3,665,433; 3,666,977; 3,827,081; and 3,922,718 among others.

### Voice Coil Motors:

Workers in the art are familiar with linear magnetic actuators, especially those adapted for reciprocating magnetic transducers relative to magnetic disk surfaces or the like. Such an actuator is the well-known voice coil motor (VCM, or moving coil actuator arrangement). This structure will be recognized as comprising an E-shaped magnetic structure including a central core along which a moving coil is adapted to be movably mounted. "Working flux" circulates through the magnet, traverses a gap, between pole pieces and a core, and is intercepted by the coil. When the coil is energized with a prescribed electric current and cuts a certain flux (prescribed flux density B and current i in coil of length L yields certain force, F = BLi, it will be induced to move as indicated by the arrow. The direction of motion will depend on the polarity of the current relative to the flux, as known in the art.

The "voice coil" motor (VCM) comprises a solenoid like those used to drive an audio speaker. In disk drives, magnetic read/write heads are commonly carried by a carriage driven by a VC motor including a mobile electric coil positioned in a magnetic field and fed by a current of selected intensity and polarity. This magnetic field is typically established by permanent magnet means disposed about the movable coil.

Such a VC linear positioner can exhibit certain disadvantages – for example: undesirably large mass and associated high power requirements; a great burden is placed upon the power requirements to provide maximum acceleration. Such VC actuators are not particularly efficient in converting electrical power.

From US-A-4,144,466, it is known a voice coil linear actuator including a prescribed drive coil structure mounted on coil-mount means and adapted to be normally thrust through magnetic flux at a prescribed range of speeds, whereby appreciable eddy-current is generated on at least a portion of the coil-mount means, this portion including conductive connect means spaced from said coil structure and conductive bridge means connecting said connect means to said drive coil structure, said connect means including dielectric impedance means intersecting at least one eddy-current path.

Such actuators commonly experience problems with "eddy currents". Eddy currents impress a "drag" on the actuator, retarding it with a magnitude proportional to velocity. A feature hereof is to enhance eddy current drag, so that it functions as a brake during high velocity, reducing such to a safer level particularly by increasing structure resistance (e.g., with a gapped-ring and narrow-rib housing).

## SUMMARY OF THE INVENTION

An object of the invention is to improve power efficiency of such voice coil linear actuators by exhibiting breaking eddy-current-drag at unduly high speeds.

To accomplish this object, in the above voice coil linear actuator the bridge means are formed to exhibit high impedance in conducting eddy-current.

Advantageous embodiments are defined in subclaims 2 to 12.

FIG. 1 is an isometric sketch of a preferred embodiment comprising a portion of a disk drive actuator;

FIG. 2 is a simplified section through FIG. 1, with FIG. 3 showing an enlarged view of a portion thereof;

FIG. 4 is an end-view of FIG. 1;

FIG. 5 is a schematic enlarged end view of two concentric ring members of FIG. 1; while FIG. 6 shows the inner ring thereof detached;

FIG. 7 is a block diagram of a feedback amplifier arrangement used to explain the function of the visco-elastic member in FIG. 1, while the plot in FIG. 8 illustrates this function in idealized fashion, with the plots in FIGS. 9A, 9B showing exemplary performance vs. frequency of this member (9A) vs. a control structure (9B); and FIG. 10 shows an idealized plot of phase variance therefor;

FIG. 11 is an idealized plot of eddy-current braking-force vs. actuator speed for structures like the above embodiment;

FIGS. 12A, 12B plot vibration vs. frequency for the embodiment vs. a control.

### Eddy current drag:

Workers in the art are aware that such a voice coil motor is apt to experience eddy current effects. It would be evident that one will normally try to minimize such where possible; e.g., it can be serious to catastrophic to translate units like those discussed below at higher actuator velocities, without reducing velocity. What is not evident (now) is that in certain instances, one can simply adapt eddy-current drag to help brake the actuator, e.g. only at "high speeds".

A general goal herein is to enhance "eddy drag" at high actuator speed (e.g., above 1,397 to 1,524 m/s; purposely increasing drag by simple structural changes.

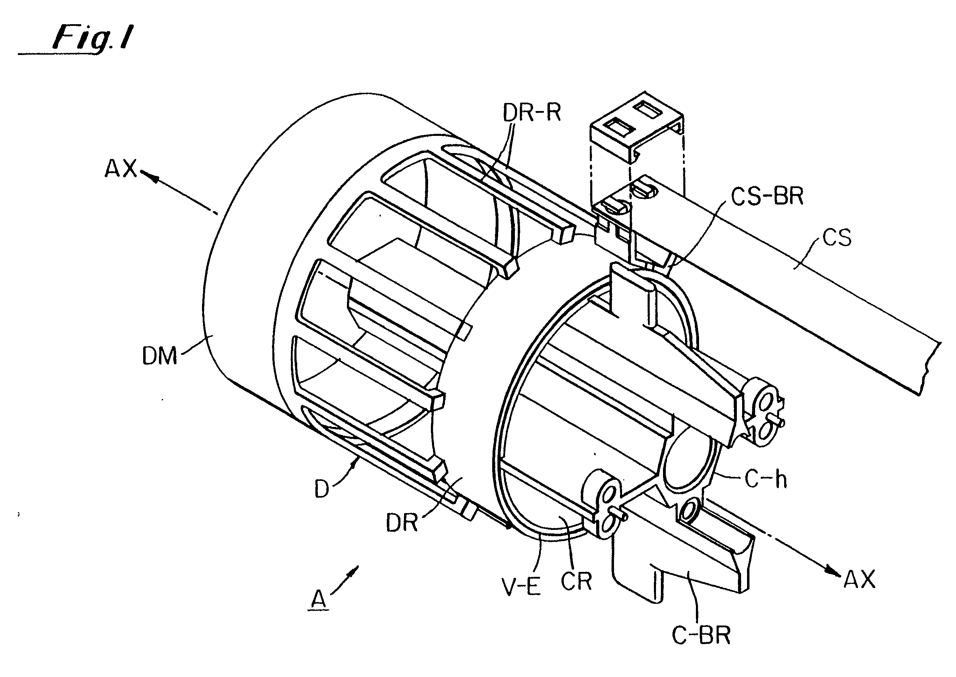

FIGS. 1 to 4 indicate a particular embodiment of the subject invention, namely actuator (core unit) A, wherein eddy current effects are to be so controlled.

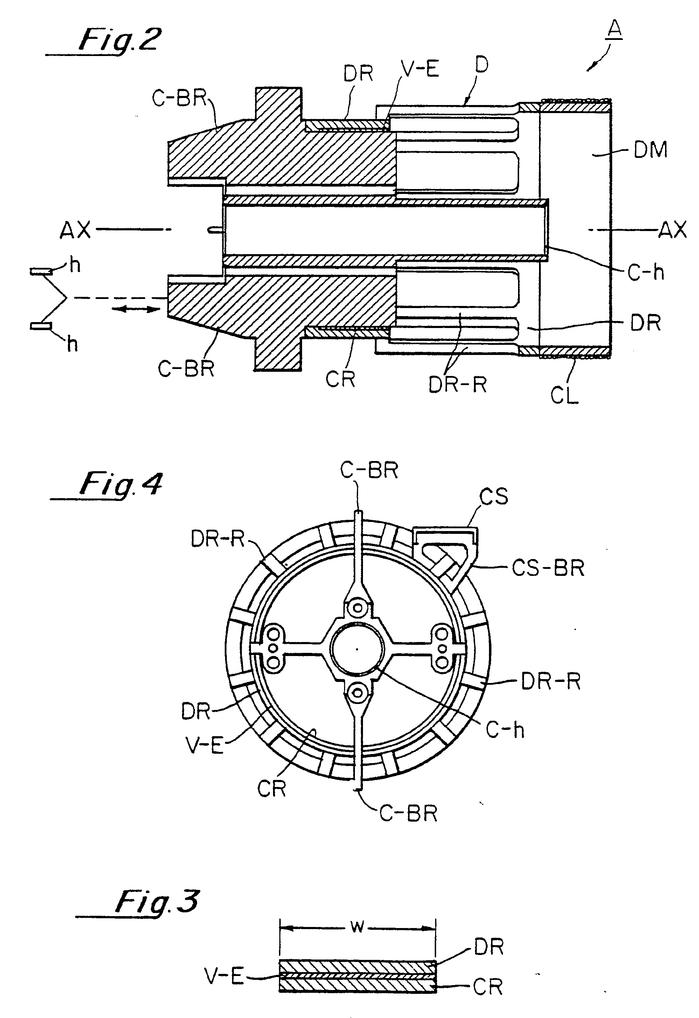

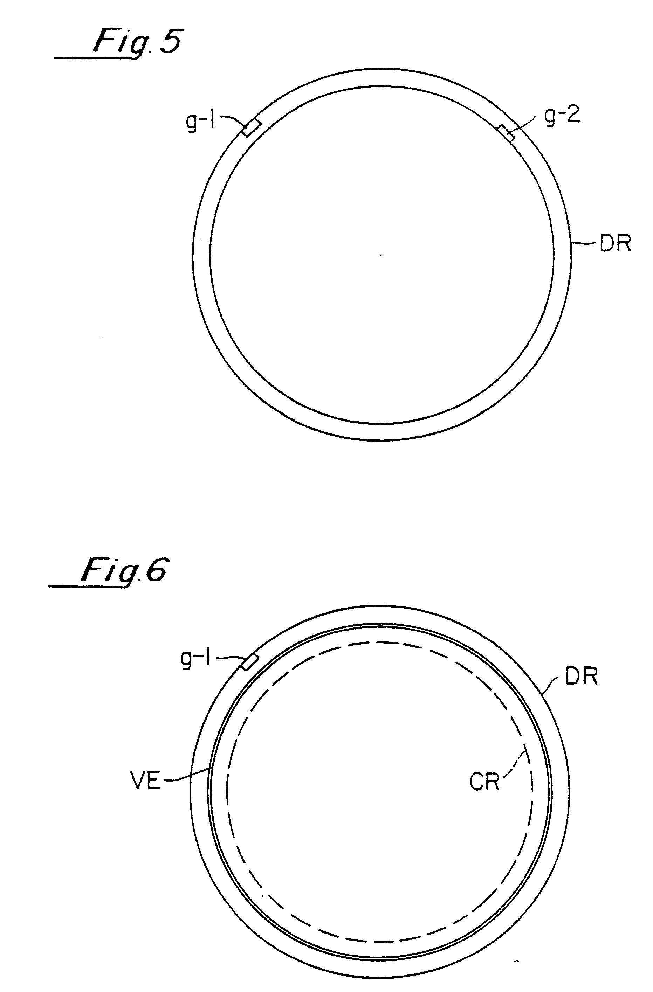

Referencing FIGS. 1, 2, and 4 particularly, actuator core unit A will be seen as comprising a central hub portion C-h understood as mounted on carriage means, (not shown) as known in the art, and adapted to be controllably translated along its axis, AX -- AX, by electromagnetic forces invoked by application of current through coil CL. Hub C-h will be understood as mounting four bracket members, C-BR, spaced equidistant thereabout (see also FIG. 5), with each such bracket C-BR understood as carrying its own actuator arm. Each arm, in turn, mounts read/write head units as indicated schematically at h, h in FIG. 2, the unit (C-BR etc.) being understood as adapted to be translated linearly back and forth along direction AX - AX as indicated by the motion arrow. Encircling bracket C-BR and joined thereto, according to the invention, is a mounting ring CR. Ring CR is, in turn, coupled "visco-elastically" (as described below) to an outer "damping ring" member DR. Ring DR is a portion of a coil mounting drum D, whose flat aft portion DM carries the actuator coil CL. Connecting ring DR with coil-mount DM, according to the invention, are "rib means" DR-R spaced equally about the periphery of drum D.

Coil CL may be constructed in any known fashion, for instance of insulated windings wound closely around drum surface DM, with the current-input ends thereof led across one of the ribs DR-R to a resilient strap-conductor means CS mounted on ring DR. Strap CS is connectable at its opposite end to a current input plug as known in the art. Strap means CS may be mounted on ring DR via an associated bracket CS-BR as seen best in FIG.1 and 4 and known in the art. Hub C-h and bracket C-BR may comprise any light rigid nonmagnetic metal such as an aluminum alloy, with Co-Cr surface, while drum D is preferably comprised of aluminum, or like nonmagnetic metal.

### --Drum Ring DR:

According to one salient feature, drum ring (damping collar) DR is given a prescribed width W (see FIG. 3) and is interrupted, across its width, by a slit with a prescribed gap g-1 (FIG. 5) adapted to increase resistance and increase eddy current brake force during high-velocity actuation (when coil CL is interacting with its outer magnets, not shown here, but understood in the art). Ring DR need only be thick enough to rigidly hold its shape. For instance, for a 145 g, .1 - .2 watt actuator like that depicted here is expected to reciprocate the unit about 30,48 mm (axially along AX -- AX) at from 1,016 to 1,524 m/s, with a drum D about 63,5 - 76,2 mm long (DM about 19,05 mm wide under CL). It will be found satisfactory to implement this with a ring DR about 51,308 mm in diameter and a gap g-1 about 1,016 mm long. Reduction in width W, or increase in length of gap-1 will increase resistance and enhance the eddy-current braking.

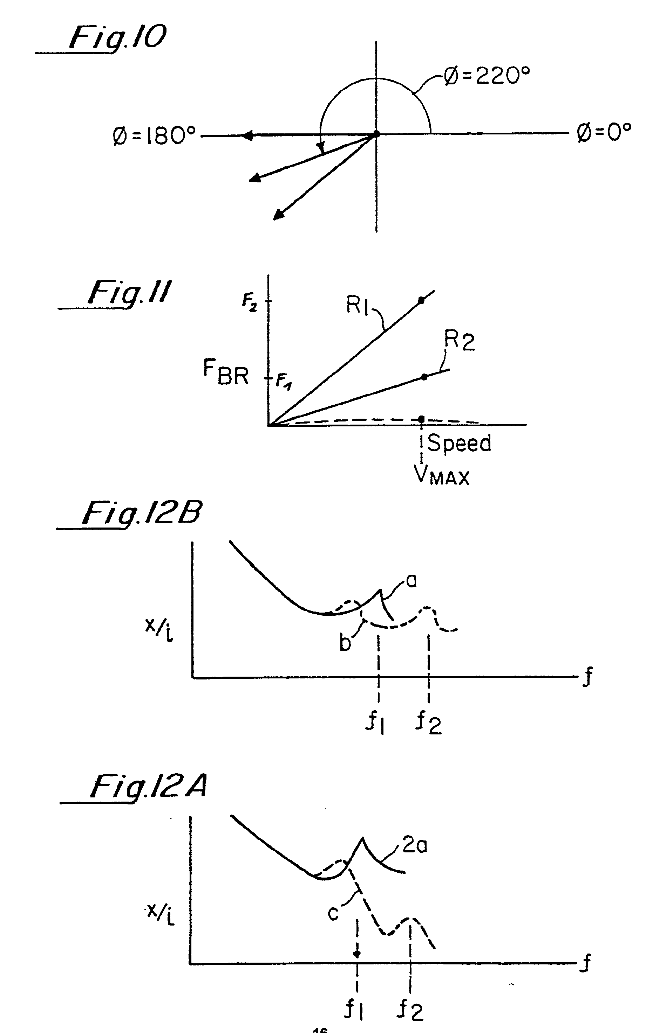

Workers will see that a prescribed summed resistance (See $R_1$, $R_2$, FIG. 11) can be arranged to provide eddy-brake force ($F_{BR}$ sufficient to reduce a certain undue velocity ($V_{max}$, FIG. 11) to a safer level. Thus, in FIG. 11 it will be understood that one summed resistance $R_2$ might give a certain braking force $F_1$, while a higher resistance $R_1$ would yield a larger braking force $F_2$. Setting of damping-gap g-1 and rib thickness can evidently be used for such control.

--Ribs DR-R:

According to a related feature, the connect-area of drum D connecting ring DR with coil-carrying-surface DM is cut-out and implemented as a set of relatively thin, axially extending ribs DR-R, whose width and thickness (cross-sectional area) is thin enough to increase housing resistance (eddy-V) and so increase braking force at high actuation speeds (e.g., above 1,524 to 1,778 m/s here; observed to reduce 2,286+ to 1,778 - 1,905 m/s. To keep the drum short, and the resonance frequency high, one should reduce rib length as much as possible.

For instance, in the embodiment indicated in FIGS. 1-4, the width WR .... of ribs DR-R is approximately 3,175 mm; however, we have found that doubling this width to about 6,35 mm can decrease eddy-current drag about 15% under moderate drive speeds 0,508 to 1,016 m/s.

Also, we have noticed (as noted below) that joining drum DM to collar DR with such narrow ribs can attenuate the transfer of heat from coil CL to the visco-elastic couple VE between collar DR and ring CR, as discussed below. This can be very useful as coil CL can get very hot, especially during "SEEK" operations (e.g., up to 82°C).

In a sense, the above-described configuration of collar DR may be thought of as adapted for a "coarse adjustment" of eddy current value, whereas the rib configuration functions as a "fine adjustment".

In summary, workers will appreciate the advantages of controlling eddy-current to increase drag at operating speeds while maximizing it at higher speeds. They will also appreciate how this is done with such simple structural adjustments (of collar and ribs). The simplicity of this automatic braking control will be appreciated.

--Visco-elastic couple V-E:

As another salient feature hereof, collar DR is coupled to a support ring CR by "visco-elastic" means acting as a selective "isolator" or "low-pass filter" to, in effect, efficiently couple only prescribed low frequency vibrations from drum D to the inner structure (C-H, C-BR etc., and especially to the arms and heads carried thereby) as known in the art.

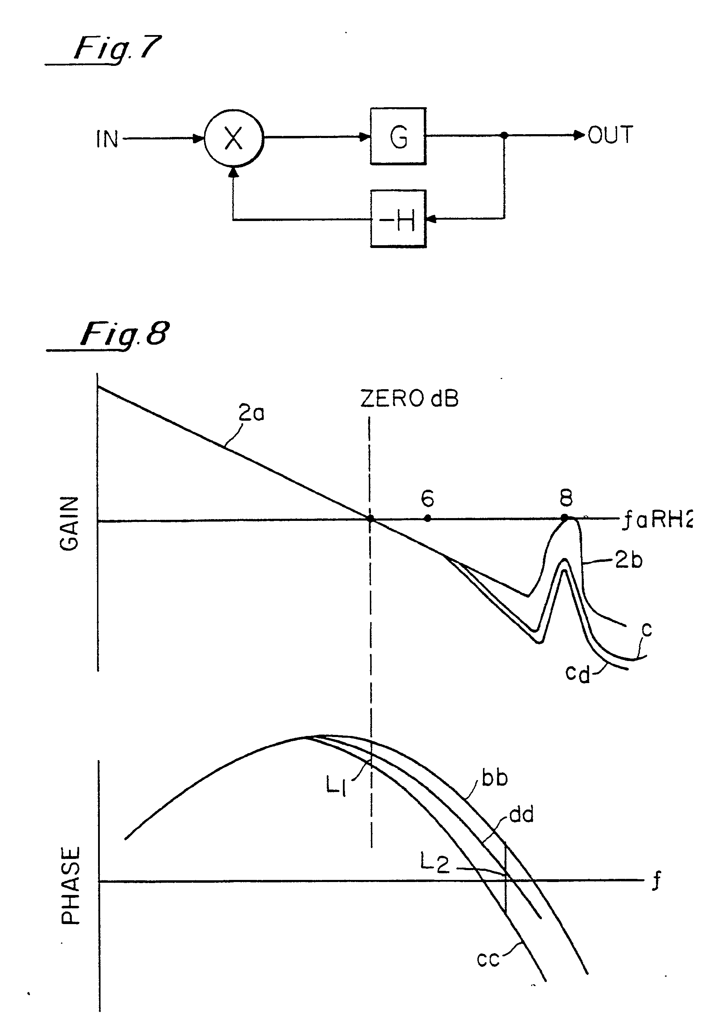

That is, rings DR, CR, together with visco-elastic couple V-E, will be seen as functioning to provide a selective damping ring or isolator which firmly couples low-frequency vibrations to the inner, head-carrying structure, but de-couples high-frequency vibration. This will be seen as especially important in avoiding damaging resonance frequencies associated with disk drives, such as are apt to occur at the higher frequencies. Thus, the V-E couple arrangement will be designed, especially, to decouple such resonant frequencies as understood in the art. Workers will understand that the couple V-E, (e.g., as seen in FIGS. 4 and 6) will be designed to be a relatively stiff, efficient force-transmitting "couple" at prescribed lower frequencies (in this case up to about 60 Khz), whereas at the higher frequencies (involving higher shear), couple V-E will be understood as functioning more as a resilient damping type material that, then, goes into shear and thus absorbs much of the high frequency, high-force vibrations from drum D. Workers will recognize that shear-damping is superior (e.g., to compression damping).

Couple V-E has been successfully implemented with for instance, a commercially available tape from 3M company of Minneapolis: "Adhesive Transfer Tape with Isotacs PS Additive, Y9473", having the width of rings DR, CR and about 0,254 mm thick (and exhibiting an elastomeric web with adhesive on both sides thereof). The undeformed 3-M tape is about 0,254 mm thick, but it is compressible to about 0,2286 mm as mentioned below, without becoming too rigid.

Such tape has been found to, very nicely, implement the invention and to give a visco-elastic couple very satisfactorily, showing surprising rigidity at low frequencies, yet good isolating resilience (shear) at higher frequencies. For instance, under a static bench test, it was found to bond ring DR to CR so rigidly as to resist about 444,98 N of axial force therebetween without initiating more than minor shear; and even beyond this, its elastic limits were not exceeded. Workers will be surprised at how effectively such "bonding tape" can function in shear-damping of vibrations. Heretofore it has been used only for its bonding characteristics. Of course, analogous bonding tapes etc., with little or no elastomeric properties will be nonpreferred [e.g., a tape with a perfectly rigid web].

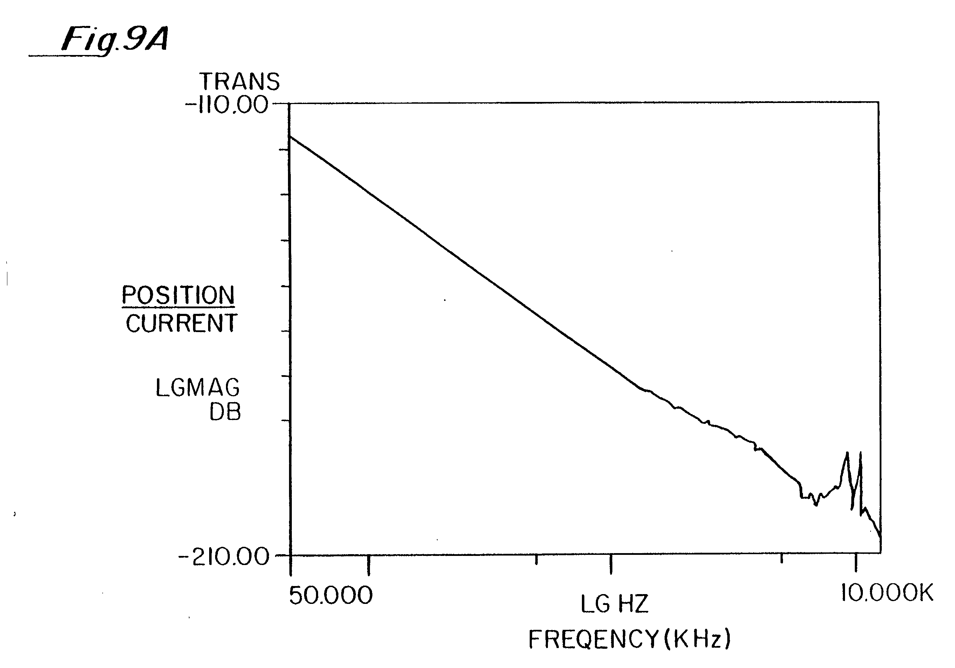

–Filter performance, FIGS. 7 and 8:

The actuator servo system contemplated may be thought of as a "closed loop" servo of the type indicated in FIG. 7, wherein input is amplified by a forward-gain amplifier G with a feedback loop, including negative-feedback (minus H) as known in the art. The equivalent open loop system would simply comprise an amplifier of gain G/l + GH as known in the art; where, as the product GH goes to -1, overall gain goes to infinity, and the system, of course, becomes unstable.

FIG. 8 is a plot of gain, and phase, vs. frequency, wherein it will be seen that the gain (slope m = a) is about -2 through a prescribed minimum frequency (here, about 6 KHZ), above which certain resonances may be expected, such as that shown at 8 KHZ. Workers will understand that a major goal of a system designer is to keep the system operating so that such massive resonances do not break (cross) the zero-d B axis. Such, of course, is the purpose and effect of our subject "filter", using visco-elastic means V-E as described above.

The phase plot in FIG.8 will be understood as normally proceeding along curve 2a (that is, without using the filter, or couple, V-E of the invention) and exhibit some resonant peaking as indicated at curve b. But when modified to use the subject invention (mechanical filter with coupe V-E) it will follow curve cd, i.e., the resonance peak will be suppressed; also the slope (dB/f) will be steeper (above 6 KHZ). This is the kind of effect we have seen using couple V-E. [analogously, an electrical filter could possibly give a like effect —as idealized at curve c].

By comparison, prior art methods for handling such resonance problems have involved applying electrical feedback to the drive amplifier and derating it at resonance frequencies. This has involved some undesirable results, such as significant "loss of phase margin", something that must be kept to a minimum, as workers will understand. Such is illustrated schematically at curve cc in FIG. 8 where the "phase margin loss" will be seen as considerably more than that using the invention (e.g., loss $L_1$, at dB = o; L2 at 7-8 $KH_2$).

Workers will recognize that here, the problem is that there exist maximal resonances giving -1 gain on the phase curve, for instance, with phase at 180°. It may be seen in FIG. 8 that at zero-dB, the phase margin is as indicated at $L_1$. One wants to minimize phase margin there (and elsewhere) so the system does not lose stability— as workers will appreciate.

Ideally, couple V-E will effect the above; i.e., couple V-E is adequately rigid except under "excess" vibrational force, whereupon it becomes somewhat elastic, attenuating shaking-amplitude, by going into elastic-shear.

--Preferred assembly of couple V-E with rings:

According to another feature hereof, I have found a simple preferred method of assembling this coupled damping structure, that is placing couple V-E and ring CR within damping ring DR as indicated schematically in FIG. 6. Here, it will be assumed that damping ring DR has an inner diameter of 49,3776 mm while suspension ring CR has an outer diameter of 48,8696 mm in its static unstressed state. This will leave a gap radially between CR and DR of about 0,254 mm. In such a case we have found it advantageous to use a tape VE like the mentioned 3M #Y9473, which is about 0,254 mm thick (overall, web plus adhesive, both sides) in its static undeformed state and apply it to the inner side of ring DR as indicated schematically in FIG. 6. Next, one cuts a slit (e.g., about 1.016 mm wide) across ring CR so it may be compressed to have a reduced outer diameter, to be readily inserted within tape V-E. Thus, one compresses CR to close this slit and inserts CR within the confines of tape V-E (and with the CR slit g-2 mismatched, and out of registery with, slit g-1 on ring DR)—thereupon releasing CR so that its natural resilience will thrust it outwardly, compressing tape V-E so that its resilient web becomes thinner, yet is still resilient — here from 0,254 mm to 0,2286 mm thick — one should not compress it too much lest it lose requisite resilience. Of course, ring CR is selected to exhibit suitable resilient force against tape V-E (when so slit and compressed, then released) to so compress it lightly (e.g., not beyond about 0,1524 - 0,1778 mm thickness; else it will be too rigid).

It is further found that so slitting ring CR rather surprisingly does not impair the mentioned low-frequency/high-frequency performance of the unit in operation.

Results:

The couple V-E aforedescribed gives surprisingly good service, especially in light of its simplicity.

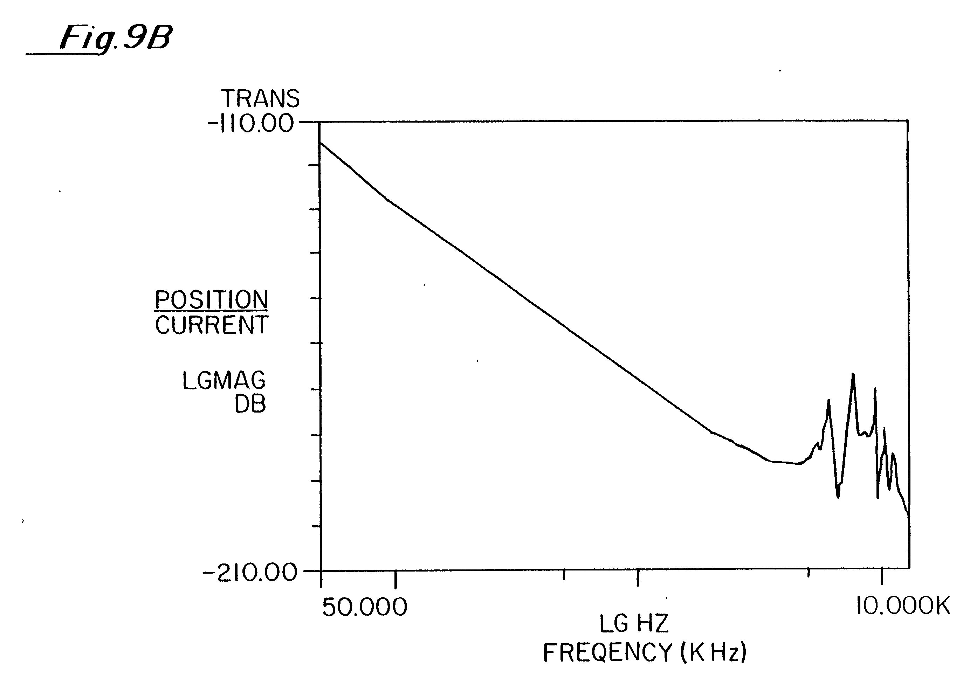

For instance, it was tested for comparative frequency response against a like control unit lacking the damping structure (V-E, CR on DR). In a vibration test, current was applied to excite coil CL and vibrate the unit across a wide range of frequencies. An accelerometer was mounted on the carriage (C-h, etc.), and Accelerometer output plotted, as in FIG. 9 B as a function of frequency for the "control" unit (no visco-elastic couple V-E) and likewise for the unit with my couple V-E (see FIG. 9 A). The improvement is self-evident and surprising, especially in light of the relatively few simple modifications of actuator structure.

Modifications: Workers will appreciate that such results can be achieved with other like visco-elastic means which selectively couples (vibration) energy from coil structure to a sensitive structure connected thereto (like carriage C-h, etc., above) ---except that at higher frequencies (e.g., resonance points), it goes into elastic shear and acts as a "filter" as afore described (e.g., attenuates resonance shaking). For instance, other like, thin elastomeric webs held between vibrating members (like DR, CR) will occur to workers. And, in certain cases, when using a tape like that described, one will choose to insert several thicknesses between members, depending on space available, desired "filter characteristics", etc. And, in certain cases, one may create a "compound filter", coupling one or several tapes and inner rings inside a suspension ring like CR.

--General Overview:

Workers in the art will recognize that such improved controlled-drag actuators with modified eddy-current configurations are considerably more efficient than prior art structures, with little or no inherent trade-offs. Such actuators exhibit desirable automatic "self-braking" at high frequencies; e.g., vs. "runaway vibration". Thus, such an actuator assembly will be viewed by workers as "better balanced", with improved linearity and stability and with more efficient flux-use. And, it is interesting that eddy-current control features (e.g., ribs) can also function to affect the "filter" (e.g., protect tape vs. heat from coil, giving thermal isolation to V-E couple under collar DR), especially since the inter-rib spaces will admit cooling air. Workers will recognize that such an actuator design may be modified in various ways within the spirit of the overall concept.

It should be emphasized that visco-elastic couple VE can, and must, be used as the sole join between driving and driven sturctures to achieve the desired effects. For instance, I have tested the aforedescribed embodiment where VE is sole join between CR and DR against a like "control unit" (CU) where, in addition, the visco-elastic couple is essentially "bypassed" by rigid metal join-members, the tape being used, primarily only to bond CR to DR. FIGS. 12A, 12B offer a revealing comparison.

In FIG. 12A, vibration (excursion/current) is plotted vs. frequency for this VE coupled embodiment (curve c) and for an "untouched" structure with no tape or the like between CR and DR, only a metal bond. The same is done in FIG. 12A, where control CU is so compared (curve b). The contrast is rather remarkable, making it quite evident how much is gained by simply using my couple VE(e.g., tape described) as the sole join, rather than a mere supplement to a metal bond. For instance, note the steep "dive" taken by curve c circa $f = f$, and how much this depresses the level of a following resonance at $f = f_2$

---as apposed to curve b (control CU), when, though some "damping" may be inferred, there is nothing like the "roll-off" given by my embodiment. This is one reason why I stress that my couple VE, so, used as the sole join, performs a marked "isolation", or "quasi-filtering" function.

Moreover, workers should note that this "roll-off" effect is something that no analogous electrical filter means can provide, though they can attenuate resonances (increase Q). This makes couple VE rather remarkably unique in effect, yielding not just attenuation but also a kind of isolation (roll-off) at selected high-frequencies.

Conclusion:

Workers will appreciate how aptly such controlled-drag actuators are combined to drive transducer assemblies for disk drive apparatus and the like. In particular it will be appreciated that such actuators can be used to improve the efficiency, power and the cost-effectiveness of a transducer actuator and to improve its flux-efficiency accordingly — something workers in the art will applaud. Workers will also appreciate that such "eddy-braking actuators" may be used to reciprocate other similar loads in related environments, such as stepper meters on rotary actuators.

Further modifications of the disclosed embodiments are also possible. For example, the means and methods disclosed herein are also applicable to stable positioning of other transducers and related loads in similar systems and envrionments. For instance, related embodiments may be employed to position transducers for other forms of recording/reproducing systems, such as those in which data is recorded and reproduced optically.

**Claims**

1. A voice coil linear actuator including a prescribed drive coil structure (CL) mounted on coil-mount means (D) and adapted to be normally thrust through magnetic flux at a prescribed range of speeds, whereby appreciable eddy-current is generated on at least a portion of the coil-mount means (D), this portion including conductive connect means (DR) spaced from said coil structure (CL) and conductive bridge means (DR-R) connecting said connect means (DR) to said drive coil structure (CL), said connect means (DR) including dielectric impedance means intersecting at least one eddy-current path, characterized in that said bridge means (DR-R) are formed to exhibit high impedance in conducting eddy-current.

2. The voice coil linear actuator of claim 1 wherein the bridge means (DR-R) comprises an array of identical spaced narrow metal ribs (DR-R) whose cross-section is reduced in relation to said coil-mount means (DM) to enhance eddy-current drag voltage at actuator speeds above said range.

3. The voice coil linear actuator of claim 2 wherein the coil-mount means (D) is of nonmagnetic metal and cylindrical including a cylindrical bobbin portion (DM) and a cylindrical connect ring (DR) spaced therefrom, this ring (DR) including at least one dielectric gap (g-1, g-2) of prescribed elevated impedance whereby to generate a prescribed braking eddy-current at a prescribed actuator "crash-speed", well above said normal range of speeds.

4. The voice coil linear actuator of claim 3 wherein said bridge means comprises said array of ribs (DR-R) which are disposed equi-spaced about a cylindrical plane approximating the periphery of said bobbin (DM), the rib cross-section being set to render a prescribed braking eddy-current at said "crash-speed".

5. The voice coil linear actuator of claim 4 wherein the said coil-mount means (D), including bobbin (DM), ribs (DR-R) and ring portions (DR), is comprised of aluminium or an aluminium alloy.

6. The voice coil linear actuator of claim 5 wherein said coil-mount means (D) is carried on a carriage structure (CR) disposed radially inward thereof, being coupled to said ring (DR).

7. The voice coil linear actuator of claim 6 wherein said impedance gap (g-1; g-2) in said ring (DR) is an air gap.

8. The voice coil linear actuator of claim 7 wherein said ring (DR) is somewhat smaller in diameter than said bobbin (DM), and carries connector-current means (CS-BR) adapted to mount a flexible coil-current-conductor means (CS).

9. The voice coil linear actuator of claim 1 wherein said coil means (CL) is mounted on metallic drum means (D) which exhibits eddy-currents during electromagnetic excitation of the coil means (CL), this drum means (D) including impedance-enhancement means adapted to enhance eddy-current to the point where it produces a drag voltage apt for reducing actuator speed above a prescribed maximum speed.

10. The voice coil linear actuator of claim 9 wherein said drum (D) includes a cylindrical ring portion (DR) having at least one impedance-enhancing dielectric gap (g-1, g-2) thereacross.

11. The voice coil linear actuator of claim 9 wherein said drum (D) includes an elongated, somewhat-cylindrical portion extended axially from said coil means (CL), this extended portion including a "relieved portion" therealong defined by an array of reduced-cross section ribs (DR-R) separated from one another and providing eddy-current impedance-enhancement as well as increased resistance to heat flow.

12. The voice coil linear actuator of claims 10 and 11 wherein said ring portion (CL) is disposed at the drum end opposite said coil means, separated therefrom by said "relieved portion".

## Patentansprüche

1. Lineares Schwingspulenstellglied mit einer bestimmten Antriebsspulenstruktur (CL), die an einer Spulenbefestigungseinrichtung (D) befestigt und dazu ausgelegt ist, normalerweise durch einen Magnetfluß in einem bestimmten Geschwindigkeitsbereich bewegt zu werden, wodurch ein merklicher Wirbelstrom an mindestens einem Abschnitt der Spulenbefestigungseinrichtung (D) erzeugt wird, wobei dieser Abschnitt ein leitendes Verbindungsmittel (DR), das im Abstand von der Spulenstruktur (CL) angeordnet ist, und ein leitendes Brückenmittel (DR-R) aufweist, das das Verbindungsmittel (DR) mit der Antriebsspulenstruktur (CL) verbindet, wobei das Verbindungsmittel (DR) ein elektrisches Impedanzmittel enthält, das mindestens einen Wirbelstromweg schneidet, dadurch gekennzeichnet, daß das Brückenmittel (DR-R) ausgebildet ist, um eine hohe Impedanz im leitenden Wirbelstrom zu zeigen.

2. Lineares Schwingspulenstellglied nach Anspruch 1, bei welchem das Brückenmittel (DR-R) ein Feld von identischen, beabstandeten, schmalen Metallrippen (DR-R) aufweist, deren Querschnitt gegenüber der Spulenbefestigungseinrichtung (DM) reduziert ist, um die Wirbelstrombremsspannung bei Geschwindigkeiten des Stellgliedes oberhalb des Bereiches zu verstärken.

3. Lineares Schwingspulenstellglied nach Anspruch 2, bei welchem die Spulenbefestigungseinrichtung (D) aus nichtmagnetischem Metall und einem Zylinder mit einem zylindrischen Spulenabschnitt (DM) und einem von diesem im Abstand angeordneten, zylindrischen Verbindungsring (DR) besteht, wobei dieser Ring (DR) mindestens einen dielektrischen Spalt (g-1, g-2) von bestimmter erhöhter Impedanz enthält, um einen bestimmten Wirbelbremsstrom bei einer bestimmten "Crash-Geschwindigkeit" des Stellgliedes weit oberhalb des normalen Geschwindigkeitsbereiches zu erzeugen.

4. Lineares Schwingspulenstellglied nach Anspruch 3, bei welchem das Brückenmittel das Feld von Rippen (DR-R) aufweist, das in gleichen Abständen zueinander um eine dem Umfang der Spule (DM) angenäherte zylindrischen Ebene angeordnet sind, wobei der Rippenquerschnitt so ausgelegt ist, um einen bestimmten Wirbelbremsstrom bei einer bestimmten "Crash-Geschwindigkeit" zu erzeugen.

5. Lineares Schwingspulenstellglied nach Anspruch 4, bei welchem die Spulenbefestigungseinrichtung (D) mit der Spule (DM), den Rippen (DR-R) und den Ringabschnitten (DR) aus Aluminium oder einer Aluminiumlegierung besteht.

6. Lineares Schwingspulenstellglied nach Anspruch 5, bei welchem die Spulenbefestigungseinrichtung (D) an einer radial nach innen angeordneten Trägerstruktur (CR) getragen wird, welche mit dem Ring (DR) verbunden ist.

7. Lineares Schwingspulenstellglied nach Anspruch 6, bei welchem der Impedanzspalt (g-1; g-2) im Ring (DR) ein Luftspalt ist.

8. Lineares Schwingspulenstellglied nach Anspruch 7, bei welchem der Ring (DR) etwas kleiner im Durchmesser als die Spule (DM) ist und ein Verbindungsstrommittel (CS-BR) trägt, das ausgelegt ist, um flexible Spulenstromleitermittel (CS) zu befestigen.

9. Lineares Schwingspulenstellglied nach Anspruch 1, bei welchem das Spulenmittel (CL) an einem metallischen Trommelmittel (D) befestigt ist, das Wirbelströme während der elektromagnetischen Erregung des Spulenmittels (CL) enthält, wobei dieses Trommelmittel (D) Impedanzverstärkungsmittel aufweist, die dazu ausgelegt sind, den Wirbelstrom auf den Wert zu erhöhen, an dem er eine Bremsspannung erzeugt, die zur Reduzierung der Geschwindigkeit des Stellgliedes oberhalb einer bestimmten Maximalgeschwindigkeit geeignet ist.

10. Lineares Schwingspulenbetätigungselement nach Anspruch 9, bei welchem die Trommel (D) einen zylindrischen Ringabschnitt (DR) mit mindestens einem dielektrischen Impedanzverstärkungsspalt (g-1, g-2) aufweist.

11. Lineares Schwingspulenstellglied nach Anspruch 9, bei welchem die Trommel (D) einen länglichen, etwas zylindrischen Abschnitt aufweist, der sich axial von dem Spulenmittel (CL) erstreckt, wobei dieser erstreckte Abschnitt einen "ausgesparten Abschnitt" aufweist, der von einem Feld von Rippen (DR-R) mit reduziertem Querschnitt gebildet wird, welche voneinander getrennt sind und eine Impedanzerhöhung für den Wirbelstrom sowie einen erhöhten Widerstand für den Wärmefluß vorsehen.

12. Lineares Schwingspulenstellglied nach den Ansprüchen 10 und 11, bei welchem der Ringabschnitt (CL) am Trommelende gegenüber dem Spulenmittel getrennt von diesem durch den "ausgesparten Abschnitt" angeordnet ist.

## Revendications

1. Actuateur linéaire à bobine mobile comprenant une structure prescrite à bobine de commande (CL) montée sur des moyens de montage de bobine (D) et constituée pour être normalement poussée à travers un flux magnétique suivant une gamme de vitesses prescrites, des courants de Foucault appréciables étant ainsi engendrés dans au moins une partie des moyens de montage de bobine (D), cette partie comprenant des moyens de liaison conducteurs (DR) espacés de ladite structure à bobine (CL) et des moyens de pontage conducteurs (DR-R) reliant lesdits moyens de liaison (DR) à ladite structure à bobine de commande (CL), lesdits moyens de liaison (DR) comprenant des moyens à impédance diélectrique recoupant au moins un trajet de courants de Foucault, caractérisé en ce que lesdits moyens de pontage (DR-R) sont constitués pour présenter une impédance élevée lorsqu'ils conduisent des courants de Foucault.

2. Actuateur linéaire à bobine mobile selon la revendication 1, dans lequel les moyens de pontage (DR-R) comportent un jeu de nervures métalliques étroites, espacées, identiques (DR-R) dont la section transversale est réduite par rapport auxdits moyens de montage de bobine (DM) pour accroître la tension de freinage par courants de Foucault à des vitesses d'actuateur situées au-dessus de ladite gamme.

3. Actuateur linéaire à bobine mobile selon la revendication 2, dans lequel les moyens de montage de bobine (D) sont en un métal non magnétique et sont cylindriques, en comprenant une partie de bobine cylindrique (DM) et une couronne de liaison cylindrique (DR) espacée de la partie de bobine, cette couronne (DR) comprenant au moins un intervalle diélectrique (g-1, g-2) qui présente une impédance élevée prescrite, ce qui permet de produire des courants de Foucault de freinage à une "vitesse de catastrophe" prescrite de l'actuateur, cette vitesse étant bien supérieure à la gamme de vitesses normale.

4. Actuateur linéaire à bobine mobile selon la revendication 3, dans lequel lesdits moyens de pontage comportent ledit jeu de nervures (DR-R) qui sont disposées équidistantes sur une surface cylindrique proche de la périphérie de ladite bobine (DM), la section transversale des nervures étant déterminée pour produire des courants de Foucault de freinage à ladite "vitesse de catastrophe".

5. Actuateur linéaire à bobine mobile selon la revendication 4, dans lequel lesdits moyens de montage de bobine (D), comprenant la bobine (DM), les nervures (DR-R) et les parties de couronne (DR), sont constitués en aluminium ou en alliage d'aluminium.

6. Actuateur linéaire à bobine mobile selon la revendication 5, dans lequel lesdits moyens de montage de bobine (D) sont portés par un équipage mobile (CR) disposé en direction radiale à l'intérieur de ces moyens, cet équipage étant relié à ladite couronne (DR).

7. Actuateur linéaire à bobine mobile selon la revendication 5, dans lequel ledit intervalle d'impédance (g-1; g-2) de ladite couronne (DR) est un intervalle d'air.

8. Actuateur linéaire à bobine mobile selon la revendication 7, dans lequel ladite couronne (DR) a un diamètre un peu plus grand que celui de ladite bobine (DM) et porte des moyens de connexion courants (CS-BR) constitués pour assurer le montage d'un organe souple (CS) conduisant le courant de bobine.

9. Actuateur linéaire à bobine mobile selon la revendication 1, dans lequel ladite structure à bobine (CL) est montée sur des moyens à tambour métallique (D) qui conduisent des courants de Foucault pendant l'excitation électromagnétique de la structure à bobine (CL), ces moyens à tambour (D) comportant des moyens d'accroissement d'impédance constitués pour faire croître les courants de Foucault à un point tel qu'ils produisent une tension de freinage capable de réduire la vitesse de l'actuateur au-delà d'une vitesse maximale prescrite.

10. Actuateur linéaire à bobine mobile selon la revendication 9, dans lequel ledit tambour (D) comporte une partie annulaire cylindrique (DR) présentant au moins un intervalle diélectrique d'accroissement d'impédance (g-1, g-2) qui s'étend transversalement.

11. Actuateur linéaire à bobine mobile selon la revendication 9, dans lequel ledit tambour (D) comporte une partie allongée, sensiblement cylindrique, située à distance axiale de ladite structure à bobine (CL), cette partie allongée comprenant sur sa longueur une "partie élégie" définie par un jeu de nervures à section transversale réduite (DR-R) séparées l'une de l'autre et assurant un accroissement d'impédance pour courants de Foucault ainsi qu'une résistance accrue au passage de la chaleur.

12. Actuateur linéaire à bobine mobile selon les revendications 10 et 11, dans lequel ladite partie annulaire (CL) est disposée à l'extrémité du tambour opposée à ladite structure de bobine, en étant séparée de celle-ci par ladite "partie élégie".

*Fig. 1*

_Fig.2_

A

C-BR    DR    V-E    D

DM

AX

AX

h

C-h

h

DR

C-BR

CR    DR-R    CL

_Fig.4_

C-BR

CS

DR-R

CS-BR

DR-R

C-h

DR

V-E

C-BR

CR

_Fig.3_

w

V-E

DR

CR

*Fig.5*

*Fig.6*

_Fig.7_

_Fig.8_

Fig.9A

_Fig.9A_

TRANS
-110.00

POSITION
CURRENT

LGMAG
DB

-210.00

50.000          LG HZ          10.000K
FREQENCY(KHz)

EP 0 305 474 B1

EP 0 305 474 B1

## Fig.9B

TRANS
-110.00

POSITION
CURRENT

LGMAG
DB

-210.00

50.000

10.000K

LG HZ
FREQENCY (K Hz)

Fig.10

Fig.11

Fig.12B

Fig.12A